# EUROPEAN PATENT APPLICATION

(11) **EP 3 757 870 A1**
(43) Date of publication of application: **30.12.2020**
(21) Application number: 19183003.3
(22) Date of filing: 27.06.2019
(51) Int. Cl.: G06K 9/00

(54) **METHOD AND SYSTEM FOR HANDLING OCCLUSION OF AN ENVIRONMENT SENSOR**

(71) Applicant: Visteon Global Technologies, Inc., Van Buren Township, MI 48111-5711 (US)
(72) Inventor: PFEIFLE, Martin, 72297 Seewald (DE); AMMANN, Sebastian, 76137 Karlsruhe (DE)
(74) Representative: MERH-IP Matias Erny Reichl Hoffmann Patentanwälte PartG mbB

(57) **Abstract**

A method (60) for operating a vehicle (10) which comprises an environment sensor (12) configured to capture environment data regarding an environment of the vehicle (10) is described, wherein the environment sensor (12) exhibits a technical field of view (17). The method (60) comprises determining (61) map data indicative of one or more map objects (22) within the environment of the vehicle (10). Furthermore, the method (60) comprises determining (62) an actual field of view (27) of the environment sensor (12) based on the technical field of view (17) and based on the map data. The method (60) further comprises operating (63) the vehicle (10) in dependence of the actual field of view (27).

## Description

### TECHNICAL FIELD

One or more examples described herein relate to a method or a system for handling occlusion of the field of view of an environment sensor of a vehicle.

### BACKGROUND

A vehicle, notably a road vehicle such as a car, a bus, a truck or a motorcycle, may comprise one or more environment sensors, such as a camera, a radar sensor, a lidar sensor, or an ultrasonic sensor, which are configured to capture environment data regarding an environment of the vehicle. Furthermore, a vehicle may comprise an advanced driver assistance system (ADAS), which is configured to at least partially take over the driving task of the driver of the vehicle based on the environment data provided by the one or more environment sensors. In particular, an ADAS may be configured to detect one or more objects within the environment of the vehicle based on the environment data. Furthermore, the driving task may be performed in dependence of the one or more detected objects.

An environment sensor exhibits a field of view which defines an area within the environment of the vehicle, for which environment data can technically be captured using the environment sensor. This field of view may be referred to as the "technical field of view". The technical field of view may be reduced due to occlusion. By way of example, an object which lies within the technical field of view may occlude an area within the technical field of view that lies behind the object, thereby leading to an actual field of view of the environment sensor which is smaller than the theoretical field of view.

An ADAS may determine an environment model of the environment of the vehicle based on the environment data of the one or more environment sensors of the vehicle. The environment model may indicate for each point within the environment a probability on whether the point corresponds to free space or whether the point is occupied by an object. Occlusion of the technical field of view of an environment sensor typically has an impact on the environment model, because the environment data does not provide any information regarding the occupation of the occluded area of the technical field of view. Therefore, occlusion of the technical field of view may impact an ADAS, such as in regards to object detection or operation of the vehicle.

### BRIEF SUMMARY OF THE INVENTION

According to an aspect, a method for operating a vehicle which comprises an environment sensor configured to capture environment data regarding an environment of the vehicle is described. The environment sensor exhibits a technical field of view. The method comprising determining map data indicative of one or more map objects within the environment of the vehicle. Furthermore, the method comprises determining an actual field of view (also referred to herein as an occluded field of view) of the environment sensor based on the technical field of view and based on the map data. In addition, the method comprises operating the vehicle in dependence of the actual field of view.

According to another aspect, a system for a vehicle is described. The system comprises an environment sensor configured to capture environment data regarding an environment of the vehicle, wherein the environment sensor exhibits a technical field of view within which environment data can technically be captured. Furthermore, the system comprises a control unit which is configured to determine map data indicative of one or more map objects within the environment of the vehicle. Furthermore, the control unit is configured to determine an actual field of view of the environment sensor based on the technical field of view and based on the map data. In addition, the control unit is configured to operate the vehicle in dependence of the actual field of view.

According to another aspect, a vehicle, notably a (one-track or two track) road vehicle, is described, such as a car, a bus, a truck or a motorcycle. The vehicle comprises a system described in accordance with one or more examples of the present document.

### BRIEF DESCRIPTION OF THE DRAWINGS

Fig. 1 shows example components of a vehicle.
Figs. 2a to 2b illustrate example occlusions of the technical field of view of environment sensors of a vehicle.
Figs. 3a and 3b illustrate example schemes for describing the actual field of view of an environment sensor.
Fig. 4 shows tracked objects within or outside of the actual field of view of an environment sensor.
Figs. 5a and 5b illustrate the handling of uncertainty when determining the actual field of view of an environment sensor.
Fig. 6 shows a flow chart of an example method for operating a vehicle.

### DETAILED DESCRIPTION OF THE INVENTION

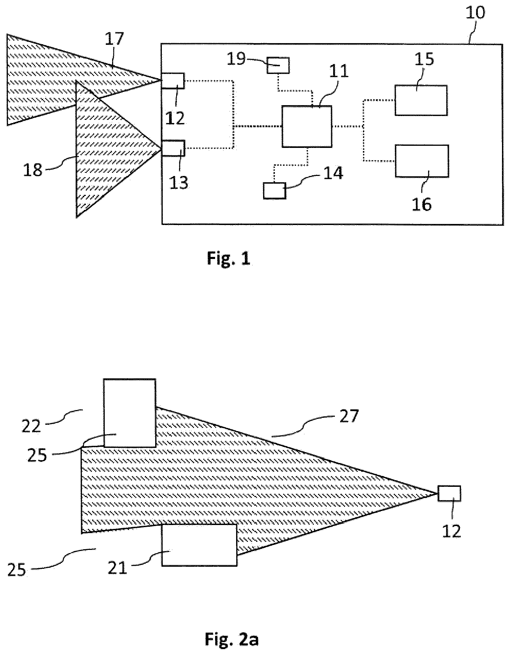

As outlined above, the present document relates to handling occlusion of the technical field of view of an environment sensor of a vehicle. In this context, Fig. 1 shows a block diagram with example components of a vehicle 10, notably of a two-track vehicle. The vehicle 10 comprises example environment sensors 12, 13 which exhibit respective technical field of views 17, 18. Example environment sensors 12, 13 are a camera, a radar sensor, a lidar sensor, and/or an ultrasonic sensor. Each environment sensor 12, 13 may be configured to capture sensor data (i.e. environment data) regarding the area of the environment of the vehicle 10, which lies within the technical field of view 17, 18 of the respective environment sensor 12, 13.

Furthermore, the vehicle 10 comprises a control unit 11, notably an electronic control unit, ECU, configured to control one or more actuators 15, 16 of the vehicle 10 in dependence of the environment data of the one or more environment sensors 12, 13. Based on the environment data, the control unit 11 may send a control signal to the one or more actuators 15, 16. The control signal may cause the one or more actuators 15, 16 to operate, such as to perform an action. The control signal may include command instructions to cause the one or more actuators 15, 16 to operate, such as to perform the action. Example actuators 15, 16 are a propulsion motor or engine, a braking system and/or a steering system of the vehicle 10. The actuators 15, 16 may be configured to provide forward and/or sideways control of the vehicle 10. Hence, the control unit 11 may be configured to control the one or more actuators 15, 16, in order to perform the forward and/or sideways control of the vehicle 10 at least partially in an autonomous manner (e.g. to provide an (advanced) driver assistance system).

Furthermore, the vehicle 10 may comprise a position sensor 19, such as a GPS (Global Positioning System) and/or global navigation satellite system (GNSS) receiver, which is configured to determine sensor data (i.e. position data) regarding the vehicle position of the vehicle 10. In addition, the vehicle 10 may comprise a storage unit 14 which is configured to store map data regarding a street network. The map data may indicate the position and the course of different streets within the street network. Furthermore, the map data may indicate the position, the size, the footprint and/or the heights of map objects, notably of landmarks such as buildings or bridges, along the different streets within the street network. The information regarding map objects such as landmarks may be organized in spatial tiles (as used e.g. within the NDS standard (Navigation Data Standard).

The control unit 11 may be configured to include building footprint information, and/or enhanced 3D city models, and/or 3D landmarks from the map data into the occlusion consideration of the vehicle 10. In particular, the information on landmarks taken from the map data may be taken into account by the control unit 11 to determine the actual field of view of an environment sensor 12, 13 (which may be reduced compared to the technical field of view 17, 18, due to occlusion caused by a landmark within the environment of the vehicle 10).

In particular, the control unit 11 may be configured to determine the global GNSS position of the vehicle 10 (using the position sensor 19). Using the vehicle position of the vehicle 10, relevant landmark information may be retrieved from the map data, wherein the landmark information may indicate the footprint or a 3D model of one or more landmarks (i.e. map objects) that lie within the technical field of view 17,18 of the one or more environment sensors 12, 13 of the vehicle 10. The landmark information may then be used to adjust the actual field of view for each one of the environment sensors 12, 13.

Fig. 2a show the actual field of view 27 of the environment sensor 12. The actual field of view 27 corresponds to a subset of the technical field of view 17 of the environment sensor 12. The control unit 11 may be configured to detect one or more (moving) objects 21 within the environment of the vehicle 10. The one or more objects 21 may be determined based on the environment data which is captured by the one or more environment sensors 12, 13 of the vehicle 10. A detected object 21 occludes an area 25 of the technical field of view 17 of the environment sensor 12, wherein the area 25 lies within the shadow of the detected object 21, thereby reducing the technical field of view 17 of the environment sensor 12. In a similar manner, a map object (e.g. a landmark) 22 which is indicated within the map data may occlude a certain area 25 of the technical field of view 17 of the environment sensor 12. Overall, the occlusion by the objects 21, 22 leads to the actual field of view 27 shown in Fig. 2a.

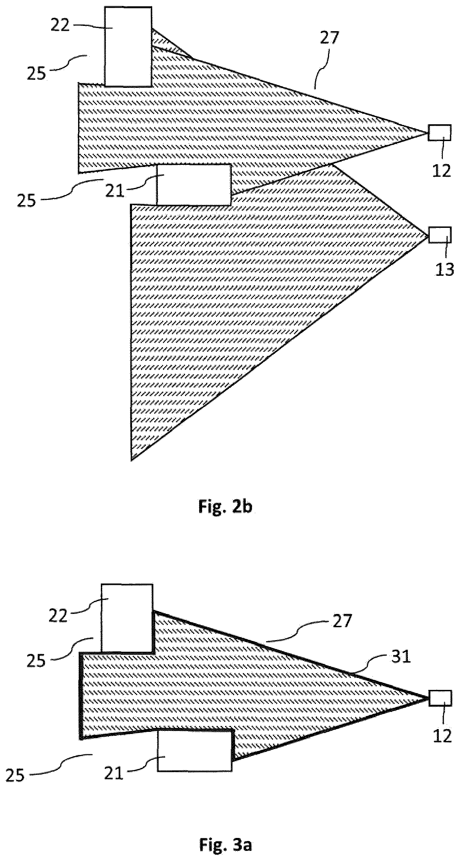

Fig. 2b shows an actual field of view 27 which is obtained when overlaying the environment data of two environment sensors 12, 13. It can be seen that due to the different technical fields of views 17, 18 of the two environment sensors 12, 13 and due to the different lines of sight of the two environment sensors 12, 13 overall occlusion of the combined field of view 27 may be reduced.

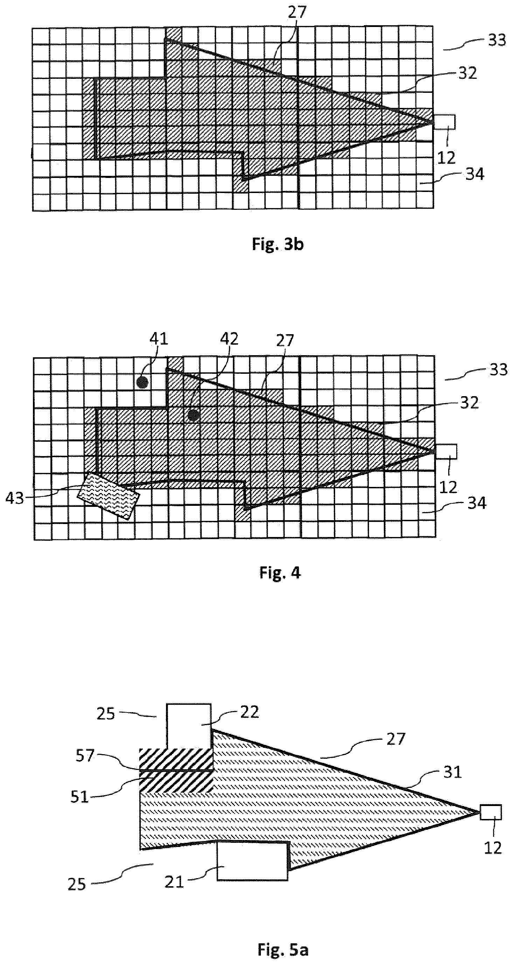

Fig. 3a and 3b show example representations 31, 32 of an actual field of view 27. In particular, Fig. 3a shows an example polygon representation 31 of the actual field of view 27. A dynamic object 21 may be represented by a polygon, notably by a bounding box. Furthermore, the shape of a map object 22 may be described by a polygon. These polygon representations of one or more objects 21, 22 may be used to provide a piece-wise linear polygon description of the actual field of view 27, as shown in Fig. 3a.

Alternatively, or in addition, the actual field of view 27 of an environment sensor 12 may be described using a grid representation 32, as shown in Fig. 3b. The environment of the vehicle 10 may be subdivided into a grid 33 with a plurality of grid cells 34. The grid cells 34 may have a size of 5cm x 5cm or less. The actual field of view 27 may be described by indicating for each grid cell 34 whether the grid cell 34 is part of the actual field of view 27 (grey shaded cells 34 in Fig. 3b) or whether the grid cell 34 is not part of the actual field of view 27 (unfilled cells 34 in Fig. 3b).

The representation 31, 32 of the actual field of view 27 of the environment sensor 12 may be taken into account when generating an environment model for the environment of the vehicle 10. In particular, it may be verified whether a tracked object 41, 42, 43 (that has e.g. been detected based on the environment data of one or more other environment sensors 13 of the vehicle 10 and/or that has e.g. been detected at a previous time instant) lies within the actual field of view 27 of the environment sensor 12 or not. This is illustrated in Fig. 4, which shows a tracked object 42 that lies within the representation 31, 32 of the actual field of view 27 and a tracked object 41 that lies outside of the representation 31, 32 of the actual field of view 27. Furthermore, Fig. 4 shows a tracked object 43 which is represented by a bounding box (notably by a rectangular box) and which lies partially within the representation 31, 32 of the actual field of view 27.

If it is determined that a tracked object 41, 42, 43 lies at least partially within the representation 31, 32 of the actual field of view 27 of the environment sensor 12, then the environment data of the environment sensor 12 may be used to determine information regarding the tracked object 41, 42, 43 (e.g. to determine the position and/or the shape of the tracked object 41, 42, 43 and/or to confirm the presence or the non-presence of the tracked object 41, 42, 43). On the other hand, if it is determined that the tracked object 41, 42, 43 lies outside of the representation 31, 32 of the actual field of view 27 of the environment sensor 12, then the environment data of the environment sensor 12 may not be used and/or may be ignored for determining information regarding the tracked object 41, 42, 43. As a result of this, the quality of the environment model of the environment of the vehicle 10 may be improved, notably because of the fact that a tracked object 41, 42, 43 which lies within the technical field of view 17 but which lies outside of the actual field of view 27 of the environment sensor 12 is not used for confirming the non-presence of the tracked object 41, 42, 43.

The environment data of the one or more environment sensors 12, 13 of the vehicle 10 is captured and/or represented relative to a vehicle coordinate system of the vehicle 10. On the other hand, the map data and by consequence the position of a map object 22 within the environment of the vehicle 10 is positioned relative to a global map coordinate system. The vehicle coordinate system may be placed within the global map coordinate system (or vice versa) based on the position data provided by the position sensor 19 of the vehicle 10. However, the position data typically comprises a certain level of uncertainty. As a result of this, the position of a map object 22 may exhibit a certain level of uncertainty when being transformed from the map coordinate system to the vehicle coordinate system.

The uncertainty of the position of a map object 22 within the vehicle coordinate system may be taken into account when determining the actual field of view 27 of the environment sensor 12. This is illustrated in Fig. 5a. The uncertainty of the object position of the map object 22 within the vehicle coordinate system may be described by a probability distribution. As a result of this, the area 25 which is occluded by the map object 22 exhibits a corresponding probability distribution. Furthermore, the boundary 57 of the actual field of view 27 varies according to the probability distribution of the object position of the map object 22. This is illustrated in Fig. 5a by the range 51 for the boundary 57 of the actual field of view 27.

It should be noted that occlusion which is due to a detected object 21 is typically not subject to uncertainty, because the object 21 is detected directly within the vehicle coordinate system.

By taking into account the uncertainty of the object position of a map object 22 within the vehicle coordinate system, a probability distribution of the actual field of view 27 of the environmentsensor 12 may be determined. In particular, for the different points of the technical field of view 17 of the environment sensor 12, a probability value may be determined, which indicates the probability that the point of the technical field of view 17 is also part of the actual field of view 27 of the environment sensor 12. The probability value may vary between 0% (certainly not part of the actual field of view 27) and 100% (certainly part of the actual field of view 27).

The probability distribution of the actual field of view 27 may be determined by sampling the probability distribution of the object position of the map object 22 within the vehicle coordinate system. For each sample of the object position a corresponding sample of the actual field of view 27 may be determined. The different samples of the actual field of view 27 for different samples of the object position may be overlaid to provide the probability distribution of the actual field of view 27. The resulting actual field of view 27 may be represented using the set of grid cells 34 for the technical field of view 17, wherein each grid cell 34 indicates the probability of occlusion of the grid cell 34 or the probability of whether the grid cell 34 is part of the actual field of view 27. Alternatively, a set of different polygons 31 may be provided to describe different actual fields of view 27, wherein each polygon 31 has an assigned probability.

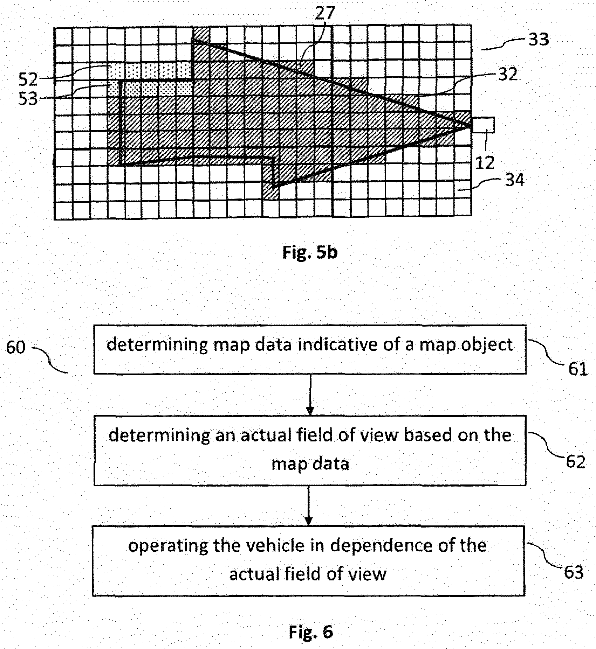

Fig. 5b shows a grid representation 32 of the probability distribution of the actual field of view 27 of the environment sensor 12. The grid representation 32 comprises difference grid cells 52, 53 which indicate the probability that the grid cello 52, 53 is part of the actual field of view 27. The different probabilities are represented in Fig. 5b by different shadings of the grid cells 52, 53.

Fig. 6 shows a flow chart of an example method 60 for operating a vehicle 10. The vehicle 10 comprises an environment sensor 12 which is configured to capture environment data (i.e. sensor data) regarding an environment of the vehicle 10. Furthermore, the environment sensor 12 exhibits a technical field of view 17. The technical field of view 17 may define the area within the environment of the vehicle 10, within which it is technically possible for the environment sensor 12 to capture environment data. The technical field of view 17 typically does not take into account objects 21, 22 within the environment of the vehicle 10 that may occlude sub-areas 25 within the technical field of view 17. The technical field of view 17 may be (solely) defined by the technical specification of the environment sensor 12 and/or by the position and/or orientation (e.g. by the pose) of the environment sensor 12 within the vehicle 10. The method 60 may be executed by a control unit 11 of the vehicle 10.

The method 60 comprises determining 61 map data which is indicative of one or more map objects 22 (notably landmarks, such as buildings) within the environment of the vehicle 10. The map data may be represented according to the NDS standard. The map data may be part of a navigation device of the vehicle 10. The map data may indicate the object position and/or the object size and/or the object footprint of map objects 22 (also referred to herein as landmarks) within a street network. Example map objects 22 are buildings, bridges, etc.

Furthermore, the method 60 comprises determining 62 an actual field of view 27 of the environment sensor 12 based on the technical field of view 17 and based on the map data. The actual field of view 27 may be a subset or a sub-area of the technical field of view 17. In particular, the actual field of view 27 may be indicative of the portion of the technical field of view 17, which is not occluded by one or more objects 21, 22 within the environment of the vehicle 10 (and for which environment data may be captured).

The method 60 may comprise determining an object position of a first map object 22 based on the map data. Furthermore, it may be determined whether or not the object position of the first map object 22 falls within the technical field of view 17 of the environment sensor 12. The actual field of view 27 of the environment sensor 12 may be determined in dependence of the first map object 22, if it is determined that the object position of the first map object 22 falls within the technical field of view 17 of the environment sensor 12. On the other hand, the actual field of view 27 of the environment sensor 12 may be determined without taking into account the first map object 22, if it is determined that the object position of the first map object 22 does not fall within the technical field of view 17 of the environment sensor 12. By taking into account the object position of one or more map objects 22, the actual field of view 27 of the environment sensor 12 may be determined in a precise manner.

In addition, the method 60 comprises operating 63 the vehicle 10 in dependence of the actual field of view 27. In particular, forward and/or sideways control of the vehicle 10 may be performed at least partially in an autonomous manner in dependence of the actual field of view 27. By way of example, an environment model of the environment of the vehicle 10 may be determined in dependence of the actual field of view 27 of the environment sensor 12. The environment model may be indicative of one or more tracked objects 41, 42, 43. The existence probabilities of the one or more tracked objects 41, 42, 43 may be adjusted in dependence of the actual field of view 27 of the environment sensor 12. The vehicle 10 may be operated in dependence of the environment model. By taking into account the actual field of view 27 of the one or more environment sensors 12 of the vehicle 10, the reliability and the precision of operation of the vehicle 10 may be improved.

The method 60 may be executed at a sequence of time instants in order to determine a sequence of actual fields of view 27 of the environment sensor 12 at the sequence of time instants, and in order to operate the vehicle 10 at the sequence of time instants in dependence of the sequence of actual fields of view 27 of the environment sensor 12. By repeating the method 60 for a sequence of time instants, continuous operation of the vehicle 10 may be ensured.

The actual field of view 27 may be represented using a polygon 31 describing the one or more boundaries 57 of the actual field of view 27. The polygon 31 may be determined by adjusting the polygon of the technical field of view 17 using polygons describing the shape of the one or more objects 21, 22 that lie within the technical field of view 17. A polygon representation 31 allows the actual field of view 27 to be described in an efficient and precise manner.

In particular, the actual field of view 27 may be represented using a set of polygons 31, wherein each polygon 31 describes the boundaries 57 of a possible sample of the actual field of view 27. The set of samples of the actual field of view 27 may describe a probability distribution of the shape of the actual field of view 27. By providing a set of polygons 31 for a set of possible samples of the actual field of view 27, uncertainties with regards to the object position of the one or more objects 21, 22 that lie within the technical field of view 17 may be taken into account in a precise and efficient manner.

Alternatively, or in addition, the actual field of view 27 may be represented using a set 32 of grid cells 52, 53 within a grid 33 which partitions the environment of the vehicle 10 into a plurality of grid cells 34. Each grid cell 52, 53 of the set 32 of grid cells 34 may be indicative of the probability that the respective grid cell 52, 53 is part of the actual field of view 27 and/or of the probability that the respective grid cell 52, 53 is not occluded by an object 21, 22 that lies within the technical field of view 17. A grid representation 32 allows the actual field of view 27 to be described in an efficient and precise manner (possibly including uncertainty aspects).

As indicated above, the map data may indicate a first map object 22. In particular, the map data may indicate an object position and/or an object size of the first map object 22. The method 60 may comprise determining a first area 25 of the technical field of view 17 of the environment sensor 12, which is occluded by the first map object 22. For this purpose, the object position and/or the object size of the first map object 22 may be taken into account. The actual field of view 27 of the environment sensor 12 may then be determined in a precise manner based on the first area 25. In particular, the first area 25 may be removed from the technical field of view 17 in order to determine the actual field of view 27.

The object position of the first map object 22 may be indicated relative to a map coordinate system of the map data. The map coordinate system may correspond to a global or world coordinate system. On the other hand, the technical field of view 17 of the environment sensor 12 may be placed within the vehicle coordinate system of the vehicle 10. In other words, the technical field of view 17 of the environment sensor 12 may be described relative to the vehicle coordinate system of the vehicle 10. The coordinate systems may be cartesian coordinate systems.

The method 60 may comprise transforming the object position of the first map object 22 from the map coordinate system into the vehicle coordinate system, to determine a transformed object position of the first map object 22. In other words, the first map object 22 may be placed within the vehicle coordinate system. The first area 25 of the technical field of view 17, which is occluded by the first map object 22, may then be determined in a precise manner based on the transformed object position of the first map object 22 within the vehicle coordinate system.

The vehicle 10 may comprise a position sensor 19 which is configured to captured position data regarding the vehicle position of the vehicle 10 within the map coordinate system. The position sensor 19 may be configured to determine GPS and/or GNSS data. The object position of the first map object 22 may be transformed from the map coordinate system into the vehicle coordinate system in a reliable manner using the position data of the position sensor 19.

The position data is typically subject to uncertainty with regards to the vehicle position. The uncertainty may be described by a probability distribution of the vehicle position. The probability distribution may be described using a plurality of sampled vehicle positions. The actual field of view 27 may be determined in dependence of the uncertainty with regards to the vehicle position. In particular, a probability distribution of the actual field of view 27 may be determined in dependence of the probability distribution of the vehicle position, thereby increasing the reliability of the environment model which is determined based on the environment data captured by the environment sensor 12.

In particular, the method may comprise sampling the probability distribution of the vehicle position using a plurality of sampled vehicle positions. Furthermore, the method may comprise determining a plurality of sampled actual fields of views 27 for the plurality of sampled vehicle positions, respectively. This may be achieved by determining a transformed object position of the first map object 22 (within the vehicle coordinate system) for each of the sampled vehicle positions, thereby providing a plurality of transformed object positions of the first map object 22 for the plurality of sampled vehicle positions, respectively. The plurality of transformed object positions of the first map object 22 may be used to determine a corresponding plurality of occluded areas 25, and by consequence, a corresponding plurality of sampled actual fields of views 27. The actual field of view 27 (notably a probability distribution of the actual field of view 27) may then be determined in a precise manner based on the plurality of sampled actual fields of views 27.

The technical field of view 17 may comprise a plurality of points or cells 34, which lie within the technical field of view 17. In other words, the technical field of view 17 may be described by a set of points or cells 34 for which environment data may technically be captured by the environment sensor 12. The actual field of view 27 may be determined such that the actual field of view 27 indicates for each of the plurality of points or cells 34 a probability value indicative of the probability that environment data can actually be captured by the environment sensor 12 for the respective point or cell 34 and/or of the probability that the respective point or cell 34 is not occluded by an object 21, 22.

The method 60 may comprise determining whether a tracked object 41, 42, 43 which lies within the technical field of view 17 of the environment sensor 12 also lies within the actual field of view 27 of the environment sensor 12 or not. The tracked object 41, 42, 43 may have been detected using environment data captured by one or more other environment sensors 13 of the vehicle 10. Alternatively, or in addition, the tracked object 41, 42, 43 may have been detected based on the environment data captured by the environment sensor 12 at one or more previous time instants.

The method 60 may comprise determining information regarding the tracked object 41, 42, 43 based on the environment data captured by the environment sensor 12, if it is determined that the tracked object 41, 42, 43 lies within the actual field of view 27 of the environment sensor 12. Alternatively, or in addition, the method 60 may comprise ignoring the environment data captured by the environment sensor 12 when determining information regarding the tracked object 41, 42, 43, if it is determined that the tracked object 41, 42, 43 lies outside of the actual field of view 27 of the environment sensor 12. Hence, the quality of the information (e.g. the position and/or the existence probability) on a tracked object 41, 42, 43 can be improved.

The vehicle 10 may be operated in dependence of the information regarding the tracked object 41, 42, 43. Alternatively, or in addition, the environment model regarding the environment of the vehicle 10 may be determined based on the information regarding the tracked object 41, 42, 43. Hence, the robustness and precision of operating a vehicle 10 may be improved.

The method 60 may comprise detecting one or more sensor objects 21 using environment data captured by the environment sensor 12 and/or by one or more other environment sensors 13 of the vehicle 10. Furthermore, the method 60 may comprise determining an area 25 of the technical field of view 17 of the environment sensor 12 which is occluded by the one or more sensor objects 21. The actual field of view 27 of the environment sensor 12 may also be determined based on the area 25 of the technical field of view 17 of the environment sensor 12, which is occluded by the one or more sensor objects 21. By taking into account one or more sensor objects 21 which have been detected based on the environment data of the one or more environment sensors 12, 13 of the vehicle 10, the precision of the actual field of view 27 of the environment sensor 12 may be improved further.

Furthermore, a corresponding system for a vehicle 10 is described. The system comprises an environment sensor 12 configured to capture environment data regarding an environment of the vehicle 10, wherein the environment sensor 12 exhibits a technical field of view 17 within which environment data can technically be captured. Furthermore, the system comprises a control unit 11 which is configured to determine map data indicative of one or more map objects 22 within the environment of the vehicle 10. Furthermore, the control unit 11 is configured to determine an actual field of view 27 of the environment sensor 12 based on the technical field of view 17 and based on the map data. In addition, the control unit 11 is configured to operate the vehicle 10 in dependence of the actual field of view 27.

The features described herein may be relevant to one or more examples of the present document in any combination. The reference numerals in the claims have merely been introduced to facilitate reading of the claims. They are by no means meant to be limiting.

Throughout this specification various examples have been discussed. However, it should be understood that the invention is not limited to any one of these. It is therefore intended that the foregoing detailed description be regarded as illustrative rather than limiting.

## Claims

1. A method (60) for operating a vehicle (10), the method (60) comprising:
capturing, via an environment sensor (12) of the vehicle (10), in a technical field of view (17) of the environment sensor (12), environment data regarding an environment of the vehicle (10);
determining (61) map data indicative of one or more map objects (22) within the environment of the vehicle (10);
determining (62) an actual field of view (27) of the environment sensor (12) based on the technical field of view (17) and based on the map data; and
operating (63) the vehicle (10) in dependence of the actual field of view (27).

2. The method (60) of claim 1, the method (60) comprising
determining an object position of a first map object (22) based on the map data;
determining whether the object position of the first map object (22) falls within the technical field of view (17) of the environment sensor (12); and
determining the actual field of view (27) of the environment sensor (12) in dependence of the first map object (22), when the object position of the first map object (22) falls within the technical field of view (17) of the environment sensor (12).

3. The method (60) of any previous claim, wherein
the map data indicates a first map object (22);
the method (60) comprises
determining a first area (25) of the technical field of view (17) of the environment sensor (12), which is occluded by the first map object (22); and
determining the actual field of view (27) of the environment sensor (12) based on the first area (25) by removing the first area (25) from the technical field of view (17).

4. The method (60) of claim 3, wherein
the map data indicates an object position and/or an object size of the first map object (22); and
the first area (25) is determined based on the object position and/or the object size of the first map object (22).

5. The method (60) of claim 4, the method (60) comprising
indicating the object position of the first map object (22) relative to a map coordinate system;
placing the technical field of view (17) of the environment sensor (12) within a vehicle coordinate system of the vehicle (10);
determining a transformed object position of the first map object (22) by transforming the object position of the first map object (22) from the map coordinate system into the vehicle coordinate system; and
determining the first area (25) based on the transformed object position of the first map object (22).

6. The method (60) of claim 5, the method (60) comprising
capturing, via a position sensor (19) of the vehicle (10), position data regarding a vehicle position of the vehicle (10) within the map coordinate system; and
transforming the object position of the first map object (22) from the map coordinate system into the vehicle coordinate system using the position data.

7. The method (60) of claim 6, wherein
the position data is subject to uncertainty with regards to the vehicle position; and
the actual field of view (27) is determined in dependence of the uncertainty with regards to the vehicle position.

8. The method (60) of claim 7, wherein the vehicle position exhibits a probability distribution, and the method (60) comprising
sampling the probability distribution of the vehicle position using a plurality of sampled vehicle positions;
determining a plurality of sampled actual fields of views (27) for the plurality of sampled vehicle positions, respectively; and
determining the actual field of view (27) based on the plurality of sampled actual fields of views (27).

9. The method (60) of any previous claim, wherein
the technical field of view (17) comprises a plurality of points which lie within the technical field of view (17); and
the actual field of view (27) indicates for each of the plurality of points a probability value indicative of a probability that the respective point can be captured by the environment sensor (12) and/or that the respective point is not occluded by an object (21, 22).

10. The method (60) of any previous claim, the method (60) comprising
determining whether a tracked object (41, 42, 43) which lies within the technical field of view (17) of the environment sensor (12) also lies within the actual field of view (27) of the environment sensor (12); and
determining information regarding the tracked object (41, 42, 43) based on the environment data captured by the environment sensor (12), when the tracked object (41, 42, 43) lies within the actual field of view (27) of the environment sensor (12).

11. The method (60) of claim 10, the method (60) comprising
operating the vehicle (10) in dependence of the information regarding the tracked object (41, 42, 43); and/or
determining an environment model regarding the environment of the vehicle (10) based on the information regarding the tracked object (41, 42, 43); and/or
detecting the tracked object (41, 42, 43) using environment data captured by one or more other environment sensors (13) of the vehicle (10) and/or by the environment sensor (12).

12. The method (60) of any previous claim, the method (60) comprising
detecting one or more sensor objects (21) using environment data captured by the environment sensor (12) and/or by one or more other environment sensors (13) of the vehicle (10);
determining an area (25) of the technical field of view (17) of the environment sensor (12) which is occluded by the one or more sensor objects (21); and
determining the actual field of view (27) of the environment sensor (12) also based on the determined area (25) of the technical field of view (17) of the environment sensor (12), which is occluded by the one or more sensor objects (21).

13. The method (60) of any previous claim, the method (60) comprising
determining a sequence of actual fields of view (27) of the environment sensor (12) at a sequence of time instants; and
operating the vehicle (10) at the sequence of time instants in dependence of the sequence of actual fields of view (27) of the environment sensor (12); wherein operating the vehicle (10) comprises performing forward and/or sideways control of the vehicle (10) at least partially in an autonomous manner.

14. The method (60) of any previous claim, wherein
the map data is part of a navigation device of the vehicle (10); and/or
the actual field of view (27) is represented using a polygon (31) describing a boundary (57) of the actual field of view (27); and/or
the actual field of view (27) is represented using a set of polygons (31); wherein each polygon (31) describes the boundary (57) of a possible sample of the actual field of view (27); and/or
the actual field of view (27) is represented using a set (32) of grid cells (52, 53) within a grid (33) which partitions the environment of the vehicle (10) into a plurality of grid cells (34); wherein each grid cell (52, 53) of the set (32) of grid cells (34) notably indicates a probability that the respective grid cell (52, 53) is part of the actual field of view (27) and/or is not occluded by an object (21, 22).

15. A system for a vehicle (10), the system comprising:
an environment sensor (12) configured to capture environment data regarding an environment of the vehicle (10); wherein the environment sensor (12) exhibits a technical field of view (17) within which environment data can technically be captured; and
a control unit (11) configured to
determine map data indicative of one or more map objects (22) within the environment of the vehicle (10);
determine an actual field of view (27) of the environment sensor (12) based on the technical field of view (17) and based on the map data; and
operate the vehicle (10) in dependence of the actual field of view (27).
